# EUROPÄISCHE PATENTANMELDUNG

(11) **EP 4 238 755 A1**
(43) Veröffentlichungstag der Anmeldung: **06.09.2023**
(21) Anmeldenummer: 22160261.8
(22) Anmeldetag: 04.03.2022
(51) Int. Cl.: B32B 7/12, B32B 3/06, B32B 5/02, B32B 7/022, B32B 7/023, B32B 17/06, B32B 17/10, B32B 27/06

(54) **SCHICHTENVERBUND UND VERFAHREN ZU DESSEN HERSTELLUNG**

(71) Anmelder: Thomas Hofberger GmbH, 82024 Taufkirchen (DE)
(72) Erfinder: HOFBERGER, Thomas, 82024 Taufkirchen bei München (DE); KLAUCK, Wolfgang, 40670 Meerbusch (DE)
(74) Vertreter: Michalski Hüttermann & Partner Patentanwälte mbB

(57) **Zusammenfassung**

Ein verbesserter Schichtenverbund, wie er beispielsweise als Mehrscheiben-Sicherheitsverbundglas zum Einsatz kommen kann, und ein Verfahren zu seiner möglichst blasenfreien Herstellung werden beschrieben. Der Schichtenverbund umfasst ein Substrat (10), eine Deckschicht (40) und eine dazwischen angeordnete Polymerschicht (30), wobei die Polymerschicht mittels Klebstoffschichten (20, 21) mit dem Substrat (10) und der Deckschicht (40) verbunden ist. Die Deckschicht (40) weist einen Lichttransmissionsgrad gemäß DIN EN ISO 410 von ≥ 50% auf. Die Polymerschicht weist (30) eine Zugfestigkeit gemäß DIN EN ISO 527 von ≥ 30 MPa auf und die Klebstoffschichten (20, 21) sind Schichten eines ausgehärteten Reaktivklebstoffs und/oder strahlenhärtenden Klebstoffs.

## Beschreibung

Die vorliegende Erfindung betrifft einen Schichtenverbund, umfassend ein Substrat, eine Deckschicht und eine dazwischen angeordnete Polymerschicht, wobei die Polymerschicht mittels Klebstoffschichten mit dem Substrat und der Deckschicht verbunden ist.

Verbundsicherheitsglas aus zwei zusammenlaminierten starren Glaslagen, wird heute typischerweise durch heißlaminierbare Polyvinylbutyral (PVB)- oder Ethylen-Vinylacetat-Copolymer (EVA)-Folien verklebt. So beschreibt beispielsweise EP 3438206 A1 eine thermoplastische Harzfolie und ein glasplattenhaltiges Laminat. Spezialiserte Produkte mit einer Ionoplast-Zwischenlage sind unter anderem unter der Marke SentryGlas im Handel. Es wird angegeben, dass im Vergleich zu PVB-Zwischenlagen solch eine Ionoplast-Zwischenlage strapazierfähiger und steifer sei.

EP 2986451 B1 offenbart ein Verfahren zum Bilden einer Verbundglasstruktur, das Verfahren umfassend: Einführen eines kontinuierlichen Bands aus flexiblem Glassubstrat, das eine Stärke von nicht mehr als 0,3 mm aufweist, in ein nicht-Glassubstratmaterial, wobei das nicht-Glassubstratmaterial einen Wärmeausdehnungskoeffizienten (coefficient of thermal expansion, CTE) aufweist, der größer ist als der des flexiblen Glassubstrats; Laminieren des flexiblen Glassubstrats auf das nicht-Glassubstratmaterial bei einer erhöhten Temperatur; und kontrolliertes Kühlen der Verbundglasstruktur, um eine Druckspannung über eine Stärke des flexiblen Glassubstrats einzuführen, wobei das flexible Glassubstrat eine Druckfestigkeit von mindestens 40 MPa über die Stärke des flexiblen Glassubstrats aufweist.

US 2003/0124296 A1 betrifft eine thermoplastische Polymerfolie mit einer Trübung von mindestens 4%, wobei die Folie in einer Laminatbarriere zum Schutz gegen das Eindringen von Gegenständen in das Laminat mit ausreichender Kraft beim Aufprall zum Zerbrechen von Glas geeignet ist, wobei das Laminat mindestens eine Glasschicht umfasst und Folgendes aufweist: direkt an der Glasschicht selbstklebend angebracht die thermoplastische Polymerfolie, wobei die thermoplastische Polymerfolie im Wesentlichen aus einem ionomeren Polymer und einem UV-Licht absorbierenden Material besteht, und wobei das Laminat in der Lage ist, wiederholte oder längere Belastungen ohne Versagen auszuhalten, selbst nach Bruch des Glases.

US 5,352,528 offenbart eine Verbundscheibe mit mindestens einer Glasscheibe und mindestens einer Folie aus PVC enthaltendem Kunststoff mit einer alterungs- und witterungsbeständigen Transparenz und einer für eine Sicherheitsscheibe geeigneten Energieaufnahme, wobei eine Klebefolie angeordnet ist zwischen der Glasscheibe und der Kunststofffolie, wobei die Klebefolie eine stärkere Haftung an dem Glas als an der Kunststofffolie aufweist, und wobei die Klebefolie ein Terpolymer umfasst, das Ethylen, entweder Vinylacetat oder Acrylester, und Maleinsäureanhydrid umfasst.

DE 10 2018 124 601 A1 beschreibt eine Glaskonstruktion für Brüstungs- und/oder Geländerverglasungen oder Glasträger mit einem als Glaslaminat ausgebildeten Verbundelement, welches aus mindestens zwei Glasscheiben besteht, die durch eine klebefähige Zwischenschicht aus Kunststoff verbunden sind, wobei mindestens eine Kante des Verbundelements einen Kantenschutz aufweist, welcher derart zumindest bereichsweise mit den jeweiligen Stirnflächen der mindestens zwei Glasscheiben des Glaslaminats verbunden ist, dass die Zwischenschicht vor Feuchtigkeitseinflüssen geschützt ist. Hierbei sei auch auf WO 2020/069983 A1 verwiesen.

WO 2014/086610 A1 betrifft ein Laminat aus zwei starren Substraten und einer dazwischen angeordneten Klebefolie, wobei zumindest eines der starren Substrate transparent ist, wobei die Dicke der Klebefolie nicht mehr als 80 µm beträgt und die Klebefolie zumindest eine Klebeschicht aus einer Klebemasse umfasst, der ein oder mehrere Weichmacher zugesetzt sind, von denen zumindest ein Weichmacher ein reaktiver Weichmacher ist, wobei der Weichmacheranteil an der Klebemasse insgesamt mindestens 15 Gew.-% beträgt und der Anteil an reaktivem Weichmacher an der Klebemasse mindestens 5 Gew.-% beträgt.

WO 2020/064297 A1 offenbart eine Verbundglasscheibe und Verfahren zu deren Herstellung. Die Verbundglasscheibe weise zwei Glas- oder Polycarbonatscheiben und mindestens eine zwischen diese eingeklebte Polymerfolie oder ein Folien-Laminat und eine zwischen diesen angeordnete elektronische Funktionseinheit auf. In einem Teil-Flächenbereich der Verbundglasscheibe ist ein Ausschnitt der Polymerfolie oder des Folien-Laminats vorgesehen und in dem Ausschnitt ist ein vollständig vorgefertigtes elektronisches Funktionsmodul untergebracht, welches eine Dicke aufweist, die höchstens gleich der Dicke der Polymerfolie oder des Folien-Laminats ist. Das elektronische Funktionsmodul hat die Form eines flachen Prismas, insbesondere eines flachen Quaders, oder einer flachen Kreisscheibe und die beiden Hauptoberflächen des flachen Prismas oder der flachen Kreisscheibe sind mit Klebstoff zum Einkleben des elektronischen Funktionsmoduls zwischen die Glas- oder Polycarbonatscheiben beschichtet.

WO 2015/097111 A1 beschreibt ein Verfahren zur Herstellung eines Schichtenverbundes, wobei der Schichtenverbund ein Substrat, eine Deckschicht und eine zwischen Substrat und Deckschicht angeordnete Klebstoffschicht umfasst. Die Klebstoffschicht kontaktiert das Substrat und die Deckschicht zumindest teilweise. Das Verfahren umfasst den Schritt: Verschwenken des Substrats und der Deckschicht aufeinander zu, so dass der Abstand der oberen Substratkante zur oberen Deckschichtkante abnimmt und der Klebstoff in Richtung der oberen Substratkante und der oberen Deckschichtkante bewegt wird. Dieses wird derart durchgeführt, dass während zumindest eines Teils des Schritts B) die Winkelhalbierende (1000) des Winkels α gegenüber der Vertikalen einen Winkel von ≥ -45° bis ≤ 45° einnimmt.

Das Gebrauchsmuster DE 202013105933 U1 offenbart einen Schichtenverbund, umfassend ein Substrat, eine Deckschicht und eine zwischen Substrat und Deckschicht angeordnete ausgehärtete Klebstoffschicht, wobei die Klebstoffschicht das Substrat und die Deckschicht zumindest teilweise kontaktiert. Das Substrat umfasst einen mineralischen Werkstoff, die Deckschicht umfasst ein Glas, zwischen Substrat und Deckschicht ist eine elektrische Funktionseinheit angeordnet und in dem Schichtenverbund beträgt der durchschnittliche Gehalt an in der Klebstoffschicht eingeschlossenen Gasblasen mit einer maximalen Ausdehnung von ≥ 100 µm weniger als 100 Gasblasen/m².

Die vorliegende Erfindung hat sich die Aufgabe gestellt, einen verbesserten Schichtenverbund, wie er beispielsweise als Mehrscheiben-Sicherheitsverbundglas zum Einsatz kommen kann, und ein Verfahren zu seiner möglichst blasenfreien Herstellung bereitzustellen.

Erfindunsgemäß gelöst wird die Aufgabe durch einen Schichtenverbund gemäß Anspruch 1 und ein Verfahren gemäß Anspruch 9. Vorteilhafte Weiterbildungen sind in den Unteransprüchen angegeben. Sie können beliebig kombiniert werden, sofern sich aus dem Kontext nicht eindeutig das Gegenteil ergibt.

Der erfindungsgemäße Schichtenverbund hat den Vorteil, dass ohne Gewichtserhöhung des Verbundes deutlich höhere Verbundfestigkeiten realisiert werden können. Bei den Festigkeiten handelt es sich insbesondere um die Kombination der Druckfestigkeit und der Durchdrückfestigkeit. Wenn gleiche Festigkeiten gefordert werden, kann der Verbund mit einem geringerem Gesamtgewicht realisiert werden.

Auch die Wärmebelastbarkeit des Schichtenverbundes kann im Vergleich zu den genannten üblichen thermoplastischen Schmelzklebfolien deutlich erhöht werden. Durch ein geringeres Gewicht der Polymerschicht kann auch das Brandverhalten positive beinflusst werden. Des Weiteren hat das erfindungsgemäße Verfahren die Vorteile, dass die Feuchtigkeitsempfindlichkeit des Verbundes im Vergleich zu EVA-, PVB- oder Ionomer-Zwischenschichten reduziert wird. Hinzu kommt, dass die Herstellzeit im Falle von Verbundglas von mehreren Stunden auf wenige Minuten reduziert werden kann. Auch der Energiebedarf wird reduziert, da die Herstellung des Verbundes bei Raumtemperatur oder leicht erhöhter Temperatur erfolgen kann und somit kein Autoklavierungsprozess erforderlich ist.

Die Erfindung wird durch die nachfolgenden Zeichnungen näher erläutert, ohne jedoch darauf beschränkt zu sein. Es zeigen:
FIG. 1 einen erfindungsgemäßen Schichtenverbund
FIG. 2 einen weiteren erfindungsgemäßen Schichtenverbund
FIG. 3 einen weiteren erfindungsgemäßen Schichtenverbund
FIG. 4-6 Anordnungen in einem Verfahren zur Herstellung eines erfindungsgemäßen Schichtenverbundes

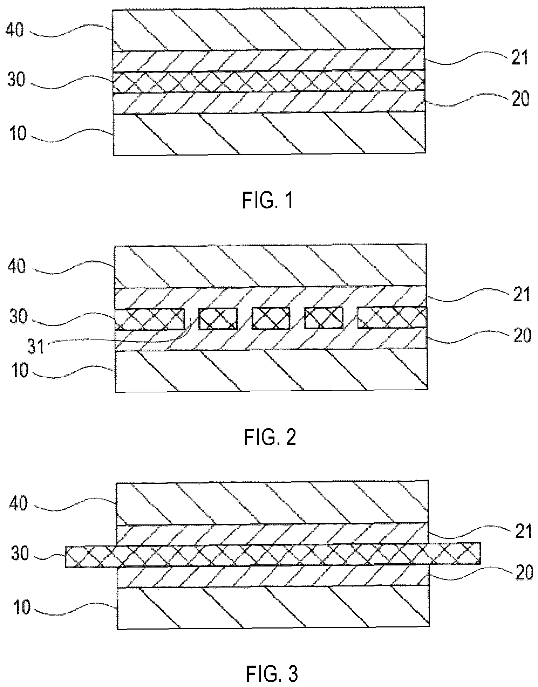

FIG. 1 zeigt einen Schichten verbund, umfassend ein Substrat 10, eine Deckschicht 40 und eine dazwischen angeordnete Polymerschicht 30, wobei die Polymerschicht mittels Klebstoffschichten 20, 21 mit dem Substrat 10 und der Deckschicht 40 verbunden ist. Erfindungsgemäß ist vorgesehen, dass die Deckschicht 40 einen Lichtransmissionsgrad gemäß DIN EN ISO 410 von ≥ 50% aufweist, die Polymerschicht 30 eine Zugfestigkeit gemäß DIN EN ISO 527 von ≥ 30 MPa aufweist und die Klebstoffschichten 20, 21 Schichten eines ausgehärteten, beispielsweise mehrkomponentigen, Reaktivklebstoffs und/oder strahlenhärtenden Klebstoffs sind.

Beispiele für geeignete Materialien für das Substrat 10 sind mineralische Werkstoffe oder Glas. Geeignete mineralische Werkstoffe sind beispielsweise Stein, Naturstein, Beton, Gips und dergleichen. Unter "Naturstein" versteht man ganz allgemein alle Gesteine, wie man sie in der Natur vorfindet. Bevorzugte Natursteine sind Granit, Marmor, Quarz, Quarzkomposit, Travertin, Sandstein, Schiefer und Achat. Beispiele für geeignete Gläser sind E-Glas, S-Glas, M-Glas, Quarzglas, Borosilikatglas, Kronglas, Kalk-Natron-Glas, Floatglas, Flintglas und/oder Bleikristallglas. Das Glas für das Substrat 10 kann gefärbt oder ungefärbt sein. Vorzugsweise beträgt die Dicke des Substrats 10 ≥ 1 mm bis ≤ 40 mm und mehr bevorzugt ≥ 2 mm bis ≤ 20 mm.

Beispiele für geeignete Materialien für die Deckschicht 40 sind Polymethyl(meth)acrylat, Polycarbonat und Glas. Beispiele für geeignete Gläser sind E-Glas, S-Glas, M-Glas, Quarzglas, Borosilikatglas, Kronglas, Kalk-Natron-Glas, Floatglas, Flintglas und/oder Bleikristallglas. Das Glas für die Deckschicht 40 kann gefärbt oder ungefärbt sein. Vorzugsweise beträgt die Dicke der Deckschicht 40 ≥ 1 mm bis ≤ 40 mm und mehr bevorzugt ≥ 2 mm bis ≤ 20 mm.

Die Deckschicht weist 40 einen Lichtransmissionsgrad gemäß DIN EN ISO 410 von ≥ 50% auf und kann somit als zumindest teilweise transparent charakterisiert werden. Vorzugsweise beträgt der Lichtransmissionsgrad ≥ 60%, mehr bevorzugt ≥ 70%, besonders bevorzugt ≥ 80% und ganz besonders bevorzugt ≥ 90%. Gemäß einer Ausführungsform kann das Substrat 10 ebenfalls die zuvor genannten Lichtransmissionsgrade (≥ 50%, vorzugsweise ≥ 60%, mehr bevorzugt ≥ 70%, besonders bevorzugt ≥ 80%, ganz besonders bevorzugt ≥ 90%) aufweisen. Gemäß einer weiteren Ausführungsform kann die Polymerschicht 30 ebenfalls die zuvor genannten Lichtransmissionsgrade aufweisen. Gemäß einer weiteren Ausführungsform können die Klebstoffschichten 20, 21 ebenfalls die zuvor genannten Lichtransmissionsgrade aufweisen. Gemäß einer weiteren Ausführungsform weist der Schichtenverbund insgesamt die zuvor genannten Lichtransmissionsgrade auf. Insbesondere kann der Lichtransmissionsgrad des Schichtenverbundes ≥ 90% betragen.

Die Polymerschicht 30 kann kontinuierlich oder diskontinuierlich ausgeführt sein. Es ist bevorzugt, dass die Fläche der Polymerschicht, definiert durch ihre äußere Umrandung genauso groß oder größer als die Fläche des Substrats 10 und/oder der der Deckschicht 40 ist. Beispielsweise kann der Schichtenverbund nach seiner Herstellung an den Rändern beschnitten werden, so dass die Flächen von Substrat 10, Polymerschicht 30 und Deckschicht 40 gleich groß sind.

Die Polymerschicht 30 weist eine Zugfestigkeit gemäß DIN EN ISO 527 von ≥ 30 MPa auf. Vorzugsweise beträgt die Zugfestigkeit ≥ 40 MPa bis ≤ 300 MPa und mehr bevorzugt ≥ 50 MPa bis ≤ 250 MPa. Für die Zwecke der vorliegenden Erfindung wird angenommen, dass die Zugfestigkeit der Polymerschicht 30 im Schichtenverbund mit der Zugfestigkeit einer freien Schicht des gleichen Materials gleichgesetzt werden können. Somit kann beispielsweise das Datenblatt einer Polymerfolie konsultiert werden, um eine erfindungsgemäß geeignete Polymerschicht 30 auszuwählen. Sofern sich die Zugfestigkeiten der Polymerschicht in Maschinenrichtung und in Transversalrichtung unterscheiden, wird der niedrigere der beiden Werte ausgewählt.

Die Dicke der Polymerschicht 30 kann ≥ 0.05 mm bis ≤ 4 mm, bevorzugt ≥ 0.10 mm bis ≤ 3 mm und mehr bevorzugt ≥ 0.15 mm bis ≤ 2 mm betragen. Die Polymerschicht 30 kann einteilig oder mehrteilig ausgebildet sein. Mehrteilige Polymerschichten lassen sich unter anderem durch laminierte Folienstapel realisieren.

Die Klebstoffschicht 20 ist diejenige Klebstoffschicht, welche das Substrat 10 mit der Polymerschicht 30 verbindet. Die Klebstoffschicht 21 verbindet die Deckschicht 40 mit der Polymerschicht 30. Es ist bevorzugt, dass in den Klebstoffschichten 20 und 21 derselbe Klebstoff vorliegt. Die Dicke einer Klebstoffschicht 20 und/oder 21 kann ≥ 1 µm bis ≤ 650 µm (bevorzugt ≥ 2 µm bis ≤ 400 µm, mehr bevorzugt ≥ 3 µm bis ≤ 150 µm, besonders bevorzugt ≥ 5 µm bis ≤ 50 µm) betragen.

Die Klebstoffschichten 20, 21 sind Schichten eines ausgehärteten Reaktivklebstoffs und/oder strahlenhärtenden Klebstoffs. Die Klebstoffe sind vorzugsweise transparent und insbesondere Zweikomponenten-Klebstoffe wie Epoxy-, (Meth)Acrylat- und Polyurethanharze sowie strahlenhärtende Klebstoffe wie (Meth)Acrylate und Urethan(meth)acrylate. Geeignet sind auch Dual Cure-Klebstoffe, in denen eine Strahlenhärtung und eine Härtung ohne Bestrahlung nebeneinander oder hintereinander ablaufen.

Vorzugsweise beträgt im erfindungsgemäßen Schichtenverbund der durchschnittliche Gehalt an in den Klebstoffschichten 20, 21 eingeschlossenen Gasblasen mit einer maximalen Ausdehnung von ≥ 100 µm weniger als 100 Gasblasen/m². Der Gasblasengehalt kann beispielsweise mittels optischer Begutachtung und Zählen der Gasblasen ermittelt werden. Denkbar sind auch automatisierte Verfahren, welche den Schichtenverbund mittels Kamera und Software zur Bildverarbeitung überprüfen. Vorzugsweise beträgt der durchschnittlicher Gehalt dieser Gasblasen weniger als 10 Gasblasen/m², mehr bevorzugt weniger als 1 Gasblase/m². Je geringer der Gasblasengehalt ist, desto höher wird die Qualität des Schichtenverbundes vom Endverbraucher empfunden.

Der Schichtenverbund kann gemäß einer weiteren Ausführungsform mehrere Polymerschichten 30 umfassen. Beispielsweise kann der Schichtenverbund den folgenden Aufbau aufweisen, wobei die einzelnen Schichten zur Vereinfachung anhand ihrer Bezugszeichen in FIG. 1 benannt werden: 10 - [20 - 30]ₙ - 21 - 40, wobei [20 - 30]ₙ die Wiederholungseinheit aus Klebstoffschicht 20 und Polymerschicht 30 bedeutet und n die Anzahl der Wiederholungseinheiten bedeutet. Beispielsweise kann n Werte von 2, 3, 4, 5, 6, 7, 8, 9 oder 10 einnehmen.

Gemäß einer Ausführungsform weist der ausgehärtete ausgehärtete Klebstoff der Klebstoffschichten (20, 21) eine Reißdehnung gemäß DIN EN ISO 527 von ≥ 10% auf. Vorzugsweise beträgt die Reißdehnung ≥ 10% bis bis ≤ 600%, mehr bevorzugt ≥ 50% bis bis ≤ 500% und besonders bevorzugt ≥ 200% bis bis ≤ 460% . Ohne auf eine Theorie festgelegt zu sein wird angenommen, dass bei solchen Reißdehnungen ein Optimum zweier gegenläufiger Effekte erreicht werden kann. Zu dehnbare Klebstoffschichten sind unter dem Gesichtspunkt der Wärmestandfestigkeit unerwünscht und zu wenig dehnbare Schichten bewirken eine schlechtere Fixierung von anhaftenden Glassplittern.

Gemäß einer weiteren Ausführungsform weist der ausgehärtete Klebstoff der Klebstoffschichten 20, 21 eine Zugfestigkeit gemäß DIN EN ISO 1465 von ≥ 2 MPa auf. Vorzugsweise beträgt der Zugfestigkeits-Wert ≥ 4 MPa bis ≤ 50 MPa und mehr bevorzugt ≥ 6 MPa bis ≤ 35 MPa.

Besonders bevorzugt ist es, wenn der ausgehärtete Klebstoff der Klebstoffschichten 20, 21 gleichzeitig die beschriebenen Reißdehnungen und Zugfestigkeiten aufweist.

Gemäß einer weiteren Ausführungsform umfasst die Polymerschicht 30 ein Polyesterpolymer, thermoplastisches Polyurethanpolymer oder ein Polycarbonatpolymer. Vorzugsweise umfasst die Polymerschicht 30 eine verstreckte, besonders bevorzugt eine biaxial verstreckte Polyesterfolie. Solche Polyesterfolien können Erweichungstemperaturen von 200 °C und mehr aufweisen. Auf diese Weise wird die thermische Stabilität des Schichtenverbundes im Brandfall, insbesondere im Vergleich zu EVA- und PVB-Verbundglas, erhöht. Biaxial verstreckte Polyesterfolien können Zugfestigkeiten von 150 MPa und mehr erreichen. Solche hohen Zugfestigkeiten wirken sich günstig auf die mechanische Stabilität der Schichtenverbunde aus, insbesondere in Situationen wie Stürmen, bei denen Trümmerteile durch die Luft geschleudert werden.

Gemäß einer weiteren Ausführungsform ist die Polymerschicht 30 als Folie ohne Aussparungen, als Folie mit einer oder mehreren Aussparungen 31, als Gewebe oder als Vlies ausgebildet. Der Fall, dass die Polymerschicht 30 als eine Folie ohne Aussparungen ausgebildet ist, lässt sich aus FIG. 1 entnehmen. FIG. 2 zeigt den Fall, dass die Polymerschicht 30 als Folie mit Aussparungen 31 ausgebildet ist. Durch die Aussparungen 31 wird eine zusätzliche, durchgehende Klebeverbindung zwischen Substrat 10 und Deckschicht 40 gebildet. Dies kann zu erhöhten Festigkeiten und speziellen optischen Effekten führen. Im Falle, dass Klebstoff und Polymerschicht den gleichen Brechungsindex besitzen, werden die Aussparungen unsichtbar.

Die Aussparungen 31 können regelmäßig oder zufällig angeordnet sein. Beispiele für Querschnitte der Aussparungen 31 sind rund, oval, quadratisch, rechteckig und streifenförmig. Die Aussparungen 31 können beispielsweise ≥ 1% bis ≤ 70% und mehr bevorzugt ≥ 5% bis ≤ 50% der Gesamtfläche der Folie, die die Polymerschicht 30 bildet, ausmachen. Durch die Ausgestaltung als Gewebe oder Vlies lassen sich ebenfalls durchgehende Klebeverbindungen zwischen Substrat 10 und Deckschicht 40 realisieren.

Gemäß einer weiteren Ausführungsform ragt wenigstens ein Teil der Polymerschicht 30 aus dem Schichtenverbund hinaus. Dieses ist in FIG. 3 abgebildet. Beispielsweise kann die Polymerschicht 30 um ≥ 0.5 cm bis ≤ 20 cm und mehr bevorzugt ≥ 1 cm bis ≤ 10 cm herausragen.

Der herausragende Teil der Polymerschicht 30 kann zur Montage und/oder zur Abdichtung des Schichtenverbundes in einem Rahmen, beispielsweise in einem Fensterrahmen, herangezogen werden. Dieses hat den Vorteil, dass im Falle eines Fensters die Druckbeständigkeit, beispielsweise im Falle extremer Windlasten, erhöht wird.

Gemäß einer weiteren Ausführungsform ist die Polymerschicht 30 nicht nachvernetzbar oder nachvernetzt. Somit sind insbesondere Ionomer-Folien ausgeschlossen. Die Nachvernetzung bezieht sich insbesondere auf thermische Nachvernetzungen, obwohl auch photochemische Nachvernetzungen mit eingeschlossen sind.

Gemäß einer weiteren Ausführungsform weist der Schichtenverbund mindestens einer der folgenden Eigenschaften auf:
- Substrat 10 und Deckschicht 40 sind unabhängig voneinander Glasschichten einer Dicke von ≥ 1 mm bis ≤ 40 mm;
- die Polymerschicht 30 weist eine Dicke von ≥ 0.05 mm bis ≤ 4 mm (vorzugsweise ≥ 0.1 mm bis ≤ 2 mm, mehr bevorzugt ≥ 0.15 mm bis ≤ 1 mm) auf;
- die Summe der Dicken von Polymerschicht 30 und Klebstoffschichten (20, 21) beträgt ≥ 0.06 mm bis ≤ 5.3 mm (bevorzugt ≥ 0.1 mm bis ≤ 2.1 mm) und
- die Dicke einer Klebstoffschicht (20, 21) beträgt ≥ 1 µm bis ≤ 650 µm (bevorzugt ≥ 2 µm bis ≤ 400 µm, mehr bevorzugt ≥ 3 µm bis ≤ 150 µm, besonders bevorzugt ≥ 5 µm bis ≤ 50 µm).

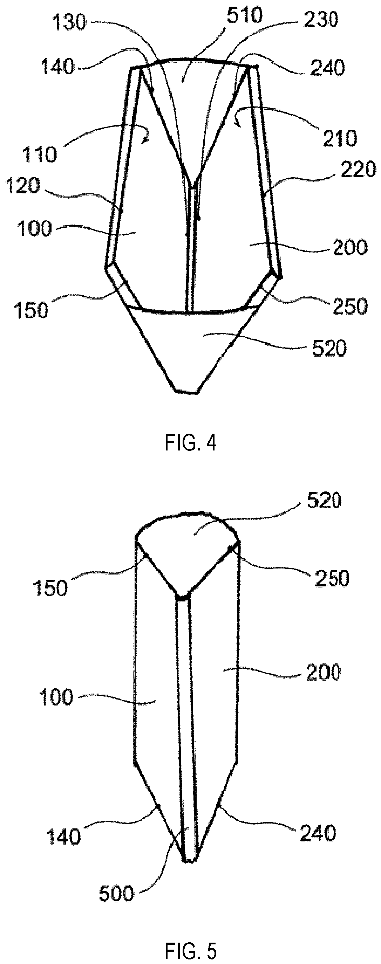

Das erfindungsgemäße Verfahren wird unter Bezugnahme auf FIG. 4 bis 6 erläutert. Das Verfahren zur Herstellung eines erfindungsgemäßen Schichtenverbundes umfasst:
A) Bereitstellen einer Anordnung, welche ein Substrat 100 und eine Deckschicht 200 umfasst, wobei
   das Substrat 100 eine erste Substratseite 110 mit einer in vertikaler Richtung gesehen oberen Substratkante 120, einer in vertikaler Richtung gesehen unteren Substratkante 130, einer ersten Substrat-Seitenkante 140 und einer der ersten Substrat-Seitenkante gegenüberliegenden zweiten Substrat-Seitenkante 150 umfasst;
   die Deckschicht 200 eine erste Deckschichtseite 210 mit einer in vertikaler Richtung gesehen oberen Deckschichtkante 220, einer in vertikaler Richtung gesehen unteren Deckschichtkante 230, einer ersten Deckschicht-Seitenkante 240 und einer der ersten Deckschicht-Seitenkante gegenüberliegenden zweiten Deckschicht-Seitenkante 250 umfasst;
   die erste Substratseite 110 und die erste Deckschichtseite 210 in der Anordnung mit einem Winkel α einander zugewandt sind und eine Winkelhalbierende 1000 des Winkels α ausgebildet wird;
   die obere Substratkante 120 und die obere Deckschichtkante 220 in der Anordnung einander gegenüber liegen;
   die untere Substratkante 130 und die untere Deckschichtkante 230 in der Anordnung einander gegenüber liegen;
   die erste Substrat-Seitenkante 140 und die erste Deckschicht-Seitenkante 240 in der Anordnung einander gegenüber liegen;
   die zweite Substrat-Seitenkante 150 und die zweite Deckschicht-Seitenkante 250 in der Anordnung einander gegenüber liegen;
   in der Anordnung der Abstand der oberen Substratkante 120 zur oberen Deckschichtkante 220 größer als der Abstand der unteren Substratkante 130 zur unteren Deckschichtkante 230 ist;
   in der Anordnung zwischen der unteren Substratkante 130 und der unteren Deckschichtkante 230 eine erste Dichtung 500 vorgesehen ist, welche den Austritt von Fluiden zwischen unterer Substratkante 130 und unterer Deckschichtkante 230 verhindert;
   in der Anordnung zwischen der ersten Substrat-Seitenkante 140 und der ersten Deckschicht-Seitenkante 240 eine zweite Dichtung 510 vorgesehen ist, welche den Austritt von Fluiden zwischen erster Substrat-Seitenkante 140 und erster Deckschicht-Seitenkante 240 verhindert;
   in der Anordnung zwischen der zweiten Substrat-Seitenkante 150 und der zweiten Deckschicht-Seitenkante 250 eine dritte Dichtung 520 vorgesehen ist, welche den Austritt von Fluiden zwischen zweiter Substrat-Seitenkante 150 und zweiter Deckschicht-Seitenkante 250 verhindert;
   so dass die Anordnung einen einseitig geöffneten Behälter zur Aufnahme von Fluiden ausbildet und in diesem Behälter weiterhin ein zur Aushärtung befähigter Klebstoff 310 vorliegt;
B) Verschwenken des Substrats 100 und der Deckschicht 200 aufeinander zu, so dass der Abstand der oberen Substratkante 120 zur oberen Deckschichtkante 220 abnimmt und der Klebstoff 310 in Richtung der oberen Substratkante 120 und der oberen Deckschichtkante 220 bewegt wird;
C) Aushärtenlassen des Klebstoffs 310.

In der Anordnung gemäß A) liegt zwischen Substrat 100 und Deckschicht 200 weiterhin eine Polymerschicht 400 mit einer Zugfestigkeit gemäß DIN EN ISO 527 von ≥ 30 MPa vor. Vorzugsweise beträgt die Zugfestigkeit ≥ 40 MPa bis ≤ 300 MPa und mehr bevorzugt ≥ 50 MPa bis ≤ 250 MPa.

Details zu Materialien und Abmessungen von Substrat, Deckschicht, Klebstoff und Polymerschicht wurden bereits im Zusammenhang mit dem erfindungsgemäßen Schichtenverbund genannt werden an dieser Stelle nicht wiederholt. Diese Angaben gelten genauso für das erfindungsgemäße Verfahren.

Gemäß einer Ausführungsform des Verfahrens beträgt wenigstens während der Schritte A), B) und C) die Temperatur der Polymerschicht (400) ≤ 50 °C. Vorzugsweise beträgt die Temperatur ≤ 40 °C und mehr bevorzugt ≤ 30 °C. Hierdurch kommt zum Ausdruck, dass kein Autoklavierungsprozess, wie es zur thermischen Vernetzung von EVA- oder Ionomer-Folien erforderlich wäre, Bestandteil des Verfahrens sein muss.

Gemäß einer weiteren Ausführungsform des Verfahrens wird nach Schritt C) kein Erwärmen des Schichtenverbundes auf eine Temperatur von ≥ 100 °C durchgeführt. Vorzugsweise wird nicht auf ≤ 80 °C erwärmt und besonders bevorzugt nicht auf ≤ 60 °C erwärmt. Hierdurch kommt ebenfalls zum Ausdruck, dass kein Autoklavierungsprozess, wie es zur thermischen Vernetzung von EVA- oder Ionomer-Folien erforderlich wäre, Bestandteil des Verfahrens sein muss.

Gemäß einer weiteren Ausführungsform des Verfahrens weist wenigstens zu Beginn des Verschwenkens in Schritt B) der Klebsttoff 310 eine Viskosität bei 20 °C gemäß DIN EN 12092 von ≤ 50000 mPas auf. Vorzugsweise beträgt die Viskosität ≥ 10 mPas bis ≤ 20000 mPas und mehr bevorzugt ≥ 50 mPas bis ≤ 10000 mPas.

Gemäß einer weiteren Ausführungsform des Verfahrens umfasst die Polymerschicht 400 ein Polyesterpolymer, thermoplastisches Polyurethanpolymer oder ein Polycarbonatpolymer.

Gemäß einer weiteren Ausführungsform des Verfahrens ist die Polymerschicht 400 als Folie ohne Aussparungen, als Folie mit einer oder mehreren Aussparungen 31 (siehe FIG. 2), als Gewebe oder als Vlies ausgebildet.

Gemäß einer weiteren Ausführungsform des Verfahrens ist die Polymerschicht 400 nicht nachvernetzbar oder nachvernetzt. Somit sind insbesondere Ionomer-Folien ausgeschlossen. Die Nachvernetzung bezieht sich insbesondere auf thermische Nachvernetzungen, obwohl auch photochemische Nachvernetzungen mit eingeschlossen sind.

FIG. 4 zeigt eine Anordnung zur Verwendung im erfindungsgemäßen Verfahren, anhand derer einige räumliche Verhältnisse und geometrische Definitionen erläutert werden sollen. Zur besseren Übersicht sind in FIG. 4 jedoch kein in der Anordnung vorliegender Klebstoff und keine Polymerschicht abgebildet.

Wie bereits beschrieben wird im erfindungsgemäßen Verfahren eine Anordnung eines Substrats und einer Deckschicht bereitgestellt. Der Weg zum Aufbau dieser Anordnung, beispielsweise die einzelnen Schritte und ihre Reihenfolge, ist dabei nicht festgelegt.

In der Anordnung wie in FIG. 4 gezeigt liegen ein Substrat 100 und eine Deckschicht 200 vor. Das Substrat weist eine erste Substratseite 110 auf. Diese erste Substratseite 110 wird im späteren Verlauf mit der korrespondierenden ersten Deckschichtseite 210 der Deckschicht 200 verklebt werden.

An den beteiligten Substrat- beziehungsweise Deckschichtseiten werden verschiedene Kanten definiert. Die erste Substratseite 110 weist eine in vertikaler Richtung (entgegen der Schwerkraft) gesehen obere Substratkante 120 und einer ihr entgegengesetzte, in vertikaler Richtung gesehen untere Substratkante 130 auf. In dem in FIG. 4 gezeigten Fall verlaufen diese Kanten horizontal. An den oberen und unteren Substratkanten 120, 130 anliegend befinden sich die Substrat- Seitenkanten 140 und 150, welche hier vertikal verlaufen.

Ebenso weist die erste Deckschichtseite 210 eine obere Deckschichtkante 220, eine untere Deckschichtkante 230 und zwei Deckschicht-Seitenkanten 240, 250 auf, welche sich gegenüber liegen. Die erste Substratseite 110 und die erste Deckschichtseite 210 sind einander zugewandt, so dass Substrat 200 und Deckschicht 210 ein annähernd "V"-förmiges Gebilde darstellen. Die obere Substratkante 120 und die obere Deckschichtkante 220 sowie die untere Substratkante 130 und die untere Deckschichtkante 230 liegen einander gegenüber. Genauso liegen die erste Substrat-Seitenkante 140 und erste Deckschicht-Seitenkante 240 sowie die zweite Substrat-Seitenkante 150 und die zweite Deckschicht-Seitenkante 250 einander gegenüber. In Übereinstimmung mit der Beschreibung des Gebildes als"V-förmig ist der Abstand der oberen Substratkante 120 zur oberen Deckschichtkante 220 größer als der Abstand der unteren Substratkante 130 zur unteren Deckschichtkante 230.

Durch den Einsatz von Dichtungsmitteln wird das "V-förmige Gebilde zu einem nach oben geöffneten Behälter oder, bildlich gesprochen, zu einem Trog. Diese Dichtungsmittel dichten die Lücken zwischen den sich gegenüberliegenden Kanten von Substrat 100 und Deckschicht 200 ab.

Hier dichten eine zweite Dichtung 510 zwischen erster Substrat-Seitenkante 140 und erster Deckschicht-Seitenkante 240 sowie eine dritte Dichtung 520 zwischen zweiter Substrat- Seitenkante 150 und zweiter Deckschicht- Seitenkante ab. Dass die Anordnung im erfindungsgemäßen Verfahren einseitig geöffnet und insbesondere"nach oben offen" ausgeführt ist, bedeutet, dass ausweichender Klebstoff genug Raum findet, um den zwischen Substrat 100 und Deckschicht 200 gebildeten Spalt zu verlassen. Mit eingeschlossen in den Fall des einseitig geöffnet seins ist, dass die Anordnung rundum abgedeckt ist, aber der Klebstoff wie gesagt entweichen kann.

FIG. 5 zeigt die Anordnung aus FIG. 4 in Ansicht von schräg unten. Man erkennt wieder das Substrat 100 und die Deckschicht 200, die Seitenkanten 140, 150, 240 und 250 sowie eine der seitlichen Dichtungen 520. Ebenfalls erkennt man nun die erste Dichtung 500, welche den Austritt von Fluiden (insbesondere Klebstoff) zwischen der unteren Kante des Substrats und der Deckschicht verhindert. Die erste Dichtung 500, zweite Dichtung 510 und dritte Dichtung 520 sind beispielsweise durch Überlappung derart ausgestaltet, dass insgesamt die Anordnung einen nach oben geöffneten Behälter darstellt, welcher einen Klebstoff aufnehmen kann. Sie können jedoch auch kombiniert werden und beispielsweise insgesamt als ein Dichtungsstück vorliegen.

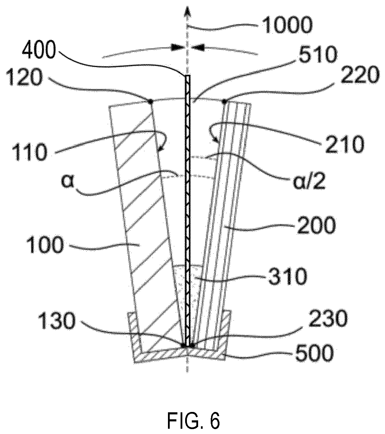

FIG. 6 zeigt eine Querschnittsansicht der in FIG. 4 und FIG. 5 gezeigten Anordnung, wobei nun weiterhin ein zur Aushärtung befähigter Klebstoff 310 und eine Polymerschicht 400 in dem gebildeten, nach oben offenen Behälter vorliegen. Der Klebstoff kontaktiert somit bereits wenigstens teilweise die erste Substratseite 110 und die erste Deckschichtseite 210. Die Polymerschicht 400 kann vor dem Einfüllen Klebstoffs in der Anordnung gemäß FIG. 4 und 5 eingebracht werden. Es ist aber ebenso möglich, dass zunächst der Klebstoff eingefüllt wird und dann die Polymerschicht in die Anordnung eingebracht wird.

Der Austritt des Klebstoffs aus dem Behälter wird durch die vorliegenden Dichtungen verhindert. Aufgrund der Querschnittsansicht ist in FIG. 6 die Dichtung 520 aus FIG. 4 und 5 nicht abgebildet. Ob der Klebstoff 310 in den fertig aufgebauten "Trog" aus Substrat 100, Deckschicht 200 und Dichtungen 500, 510, 520 eingefüllt wird oder ob er beispielsweise schon auf Substrat und/oder Deckschicht vorliegt und dann der "Trog" aufgebaut wird, ist für das erfindungsgemäße Verfahren auch einerlei. Zwischen der ersten Substratseite 110 und der ersten Deckschichtseite 210 wird ein Winkel α ausgebildet. Dementsprechend lässt sich eine Winkelhalbierende 1000 konstruieren.

Im erfindungsgemäßen Verfahren erfolgt ein Verschwenken des Substrats 100 und der Deckschicht aufeinander zu. Hierbei nimmt zumindest der Abstand der oberen Substratkante 120 zur oberen Deckschichtkante 220 zu. Bildlich gesprochen lässt sich dieses mit dem Zuklappen eines Buches vergleichen. Der"Buchrücken" wird hierbei von den unteren Kanten 130, 230 und der unteren ersten Dichtung 500 gebildet. Das Verschwenken wird in FIG. 6 durch die beiden gekrümmten Pfeile symbolisiert. Das Verschwenken des Substrats 100 und der Deckschicht 200 aufeinander zu hat die Folge, dass der zwischen ihnen angeordnete Klebstoff immer weiter die Spalten zwischen Substrat 100, Polymerschicht 400 und Deckschicht 200 entlanggedrückt wird. Somit wird er auch immer weiter in Richtung der oberen Substratkante 120 und der oberen Deckschichtkante 120 bewegt.

Es kann im erfindungsgemäßen Verfahren vorgesehen sein, dass während zumindest eines Teils des Schritts B (Verschwenken) die Winkelhalbierende 1000 des Winkels α einen Winkel von > - 45° bis < 45° gegenüber der Vertikalen einnimmt. Auf diese Weise wird erreicht, dass Öffnung der Anordnung stets nach oben zeigt, so dass im Klebstoff eingeschlossene Luftblasen auch nach oben aufsteigen können und den Spalt zwischen Substrat 100 und Deckschicht 200 verlassen können. Vorzugsweise nimmt hierbei die Winkelhalbierende 1000 des Winkels α einen Winkel von > -30° bis < 30°, mehr bevorzugt > -15° bis < 15° gegenüber der Vertikalen ein. Dann lässt sich von einer "stehenden Verklebung" des Substrats 100 und der Deckschicht 200 sprechen.

In FIG. 6 weist die Winkelhalbierende 1000 einen Winkel von 0° zur Vertikalen auf. Negative Winkel bedeuten in diesem Fall, dass die Winkelhalbierende 1000 nach links geneigt ist; positive Winkel symbolisieren eine Neigung in die andere Richtung. Insofern ist das Vorzeichen des Neigungswinkels auch abhängig vom Betrachtungsstandpunkt. Die untere Substratkante 130 und die untere Deckschichtkante 230 müssen sich nicht unbedingt berühren. Dadurch, dass die erste Dichtung 500 vorhanden ist, können sie auch voneinander beabstandet angeordnet sein. Ihr Abstand kann unter Berücksichtigung der gewünschten Dicke der Klebstoffschicht im fertigen Schichtenverbund gewählt werden.

Das Aushärtenlassen des Klebstoffs 310 kann beispielsweise durch UV-Belichtung oder aber durch Ausreagierenlassen eines 2K-Klebstoffs erfolgen.

### Beispiele

Die vorliegende Erfindung wird durch die nachfolgenden Beispiele weiter beschrieben, ohne jedoch darauf beschränkt zu sein.

Die Zugfestigkeiten (DIN EN ISO 527) der eingesetzten Folien waren:

| | **Längsrichtung (MD) [MPa]** | **Querrichtung (TD) [MPa]** |
|---|---|---|
| Ionomer-Folie (nicht thermisch nachvernetzt) | ca. 5 | ca. 5 |
| PVB-Folie | 20 | |
| Weich-PVC-Folie | 25 | |
| Polyurethan - Folie | 42 | 35 |
| | | |
| Polyester-Folie (biaxial gereckt) | 190 | 220 |
| Polycarbonat - Folie | 55 | |

Die eingesetzten Klebstoffe sind nachfolgend aufgeführt. Die angegebenen Reißdehungen (DIN EN ISO 527) betreffen den ausgehärteten Klebstoff.

| | **Beschreibung** | **Reißdehnung [%]** |
|---|---|---|
| UV-Klebstoff 1 | UV-härtendes 1-Komponenten-Gießharz basierend auf Acrylharz | 380 |
| UV-Klebstoff 2 | UV-härtendes 1 -Komponenten-Urethanacrylat-Harz, flammhemmend ausgerüstet | 450 |
| UV-Klebstoff 3 | UV-härtendes 1 -Komponenten-Urethanacrylat-Harz; Hauptkomponenten: Methylmethacrylat und Acrylat-terminiertes aliphatisches Polyurethan | 300 |
| UV-Klebstoff 4 | UV-härtendes 1-Komponenten Harz basierend auf modifizieren Acrylaten | 4 |

Alle Tests wurden mit runden, klaren Floatglasscheiben (2 mm Dicke/10 cm Durchmesser) und/oder Folien oder Filmen (unterschiedlicher Dicke, 10 cm Durchmesser) durchgeführt. Die Klebungen an Glasscheiben erfolgten mit dem UV-härtenden Klebstoff (Schichtdicken des Klebstoffs ca. 0.005 mm). Ausgehärtet wurde für 20 Minuten mit einer 2000 Watt-Hönle UVA-Lampe (UVA-Spot 200) im Abstand von 75 cm. Dieses entsprach einer UV-Bestrahlungsstärke von 50 mW/cm².

Zur Bestimmung der Druckfestigkeit und der Durchdrückfestigkeit wurden die Proben in einen Stahlzylinder mit 10 cm Außendurchmesser und 8.4 mm Innendurchmesser eingespannt. Unter Verwendung einer Spindelpresse mit abgerundeten Teflonkopf (2 cm Durchmesser) wurden die Proben eingedrückt und der durch den Teflonkopf auf die Proben ausgeübte Gewicht gemessen. Die Absenkgeschwindigkeit des Teflonkopfes betrug 15 cm/min. Der Wert für die Druckfestigkeit wurde abgelesen, wenn der Probenkörper insgesamt zu Bruch ging oder splitterte. Der Wert für die Durchdrückfestigkeit wurde abgelesen, sobald der Stempel den Probenkörper durchdrang.

Es wurde beobachtet, dass für Proben bis ca. 1 mm Dicke sich die Durchdrückfestigkeit in Abhängigkeit der Schichtdicke im Rahmen des Testverfahrens weitestgehend linear verhielt. Das ermöglichte die Umrechnung der Durchdrückfestigkeit von Folien und Klebstoffschichten auf eine Einheitsdicke (hier: 0.25 mm), um die Ergebnisse vergleichbarer zu machen.
1. Ergebnisse der Prüfungen an Glasscheiben ohne dazwischenliegenden Folien

| | **Druckfestigkeit [kg]** | **Durchdrückfestigkeit [kg]** |
|---|---|---|
| Eine Scheibe | 70 | n.b. |
| Zwei Scheiben, unverklebt | 70 | n.b |
| Zwei Scheiben, verklebt mit UV-Klebstoff 3 | 140 | n.b |
| Zwei Scheiben, verklebt mit UV-Klebstoff 4 | 140 | n.b |

2. Ergebnisse der Prüfungen an ausgehärteten Klebstoff-Filmen und an Polymer-Folien (jeweils auf eine Dicke von 0.25 mm normiert)

| | **Druckfestigkeit [kg]** | **Durchdrückfestigkeit [kg]** |
|---|---|---|
| UV-Klebstoff 1 | - | 20 |
| UV-Klebstoff 2 | - | 10 |
| UV-Klebstoff 3 | - | 28 |
| UV-Klebstoff 4 | ca. 5 (splittert) | n.b. |
| EVA-Folie (nicht thermisch nachvernetzt) | - | 13 |
| Ionomer-Folie (nicht thermisch nachvernetzt) | - | 42 |
| PVB-Folie | - | 93 |
| Weich-PVC-Folie | - | 35 |
| Polyurethan - Folie | - | 40 |
| Polyester-Folie (biaxial gereckt) | - | 260 |
| Polycarbonat - Folie | - | 112 |

3. Ergebnisse der Prüfungen an Schichtenverbunden. Die Schichtenverbunde hatten den Aufbau: Glas/ausgehärteter UV-Klebstoff 3/Polymerfolie/ausgehärteter UV-Klebstoff 3/Glas.

| **Polymerfolie** | **Druckfestigkeit [kg]** | **Durchdrückfestigkeit [kg]** |
|---|---|---|
| Ionomer-Folie (nicht thermisch nachvernetzt); Vergleichs beispiel | 130 | 130 |
| Polyester-Folie (biaxial gereckt) | 240 | 240 |
| Polycarbonat - Folie | 180 | 180 |
| PVB-Folie; Vergleichsbeispiel | 135 | 135 |

## Patentansprüche

1. Schichtenverbund, umfassend ein Substrat (10), eine Deckschicht (40) und eine dazwischen angeordnete Polymerschicht (30), wobei die Polymerschicht mittels Klebstoffschichten (20, 21) mit dem Substrat (10) und der Deckschicht (40) verbunden ist,
**dadurch gekennzeichnet, dass**
die Deckschicht (40) einen Lichttransmissionsgrad gemäß DIN EN ISO 410 von ≥ 50% aufweist,
die Polymerschicht (30) eine Zugfestigkeit gemäß DIN EN ISO 527 von ≥ 30 MPa aufweist und
die Klebstoffschichten (20, 21) Schichten eines ausgehärteten Reaktivklebstoffs und/oder strahlenhärtenden Klebstoffs sind.

2. Schichtenverbund gemäß Anspruch 1, wobei der ausgehärtete Klebstoff der Klebstoffschichten (20, 21) eine Reißdehnung gemäß DIN EN ISO 527 von ≥ 10% aufweist.

3. Schichtenverbund gemäß Anspruch 1 oder 2, wobei der ausgehärtete Klebstoff der Klebstoffschichten (20, 21) eine Zugfestigkeit gemäß DIN EN ISO 1465 von ≥ 2 MPa aufweist.

4. Schichtenverbund gemäß einem der Ansprüche 1 bis 3, wobei die Polymerschicht (30) ein Polyesterpolymer, ein thermoplastisches Polyurethanpolymer oder ein Polycarbonatpolymer umfasst.

5. Schichtenverbund gemäß einem der Ansprüche 1 bis 4, wobei die Polymerschicht (30) als Folie ohne Aussparungen, als Folie mit einer oder mehreren Aussparungen (31), als Gewebe oder als Vlies ausgebildet ist.

6. Schichtenverbund gemäß einem der Ansprüche 1 bis 5, wobei wenigstens ein Teil der Polymerschicht (30) aus dem Schichtenverbund hinausragt.

7. Schichtenverbund gemäß einem der Ansprüch1 1 bis 6, wobei die Polymerschicht (30) nicht nachvernetzbar oder nachvernetzt ist.

8. Schichtenverbund gemäß einem der Ansprüche 1 bis 7 mit mindestens einer der folgenden Eigenschaften:
- Substrat (10) und Deckschicht (40) sind unabhängig voneinander Glasschichten einer Dicke von ≥ 1 mm bis ≤ 40 mm;
- die Polymerschicht (30) weist eine Dicke von ≥ 0.05 mm bis ≤ 4 mm auf;
- die Summe der Dicken von Polymerschicht (30) und Klebstoffschichten (20, 21) beträgt ≥ 0.06 mm bis ≤ 5.3 mm und
- die Dicke einer Klebstoffschicht (20, 21) beträgt ≥ 1 µm bis ≤ 650 µm.

9. Verfahren zur Herstellung eines Schichtenverbundes gemäß einem der Ansprüche 1 bis 8, umfassend:
A) Bereitstellen einer Anordnung, welche ein Substrat (100) und eine Deckschicht (200) umfasst, wobei
das Substrat (100) eine erste Substratseite (110) mit einer in vertikaler Richtung gesehen oberen Substratkante (120), einer in vertikaler Richtung gesehen unteren Substratkante (130), einer ersten Substrat-Seitenkante (140) und einer der ersten Substrat-Seitenkante gegenüberliegenden zweiten Substrat-Seitenkante (150) umfasst;
die Deckschicht (200) eine erste Deckschichtseite (210) mit einer in vertikaler Richtung gesehen oberen Deckschichtkante (220), einer in vertikaler Richtung gesehen unteren Deckschichtkante (230), einer ersten Deckschicht-Seitenkante (240) und einer der ersten Deckschicht-Seitenkante gegenüberliegenden zweiten Deckschicht-Seitenkante (250) umfasst;
die erste Substratseite (110) und die erste Deckschichtseite (210) in der Anordnung mit einem Winkel α einander zugewandt sind und eine Winkelhalbierende (1000) des Winkels α ausgebildet wird;
die obere Substratkante (120) und die obere Deckschichtkante (220) in der Anordnung einander gegenüber liegen;
die untere Substratkante (130) und die untere Deckschichtkante (230) in der Anordnung einander gegenüber liegen;
die erste Substrat-Seitenkante (140) und die erste Deckschicht-Seitenkante (240) in der Anordnung einander gegenüber liegen;
die zweite Substrat-Seitenkante (150) und die zweite Deckschicht-Seitenkante (250) in der Anordnung einander gegenüber liegen;
in der Anordnung der Abstand der oberen Substratkante (120) zur oberen Deckschichtkante (220) größer als der Abstand der unteren Substratkante (130) zur unteren Deckschichtkante (230) ist;
in der Anordnung zwischen der unteren Substratkante (130) und der unteren Deckschichtkante (230) eine erste Dichtung (500) vorgesehen ist, welche den Austritt von Fluiden zwischen unterer Substratkante (130) und unterer Deckschichtkante (230) verhindert;
in der Anordnung zwischen der ersten Substrat-Seitenkante (140) und der ersten Deckschicht-Seitenkante (240) eine zweite Dichtung (510) vorgesehen ist, welche den Austritt von Fluiden zwischen erster Substrat-Seitenkante (140) und erster Deckschicht-Seitenkante (240) verhindert;
in der Anordnung zwischen der zweiten Substrat-Seitenkante (150) und der zweiten Deckschicht-Seitenkante (250) eine dritte Dichtung (520) vorgesehen ist, welche den Austritt von Fluiden zwischen zweiter Substrat-Seitenkante (150) und zweiter Deckschicht-Seitenkante (250) verhindert;
so dass die Anordnung einen einseitig geöffneten Behälter zur Aufnahme von Fluiden ausbildet und in diesem Behälter weiterhin ein zur Aushärtung befähigter Klebstoff (310) vorliegt;
B) Verschwenken des Substrats (100) und der Deckschicht (200) aufeinander zu, so dass der Abstand der oberen Substratkante (120) zur oberen Deckschichtkante (220) abnimmt und der Klebstoff (310) in Richtung der oberen Substratkante (120) und der oberen Deckschichtkante (220) bewegt wird;
C) Aushärtenlassen des Klebstoffs (310);
**dadurch gekennzeichnet, dass**
in der Anordnung gemäß A) zwischen Substrat (100) und Deckschicht (200) weiterhin eine Polymerschicht (400) mit einer Zugfestigkeit gemäß DIN EN ISO 527 von ≥ 30 MPa vorliegt.

10. Verfahren gemäß Anspruch 9, wobei wenigstens während der Schritte A), B) und C) die Temperatur der Polymerschicht (400) ≤ 50 °C beträgt.

11. Verfahren gemäß Anspruch 9 oder 10, wobei nach Schritt C) kein Erwärmen des Schichtenverbundes auf eine Temperatur von ≥ 100 °C durchgeführt wird.

12. Verfahren gemäß einem der Ansprüche 9 bis 11, wobei wenigstens zu Beginn des Verschwenkens in Schritt B) der Klebstoff (310) eine Viskosität bei 20 °C gemäß DIN EN 12092 von ≤ 50000 mPas aufweist.

13. Verfahren gemäß einem der Ansprüche 9 bis 12, wobei die Polymerschicht (400) ein Polyesterpolymer, ein thermoplastisches Polyurethanpolymer oder ein Polycarbonatpolymer umfasst.

14. Verfahren gemäß einem der Ansprüche 9 bis 13, wobei die Polymerschicht (400) als Folie ohne Aussparungen, als Folie mit einer oder mehreren Aussparungen (31), als Gewebe oder als Vlies ausgebildet ist.

15. Verfahren gemäß einem der Ansprüche 9 bis 14, wobei die Polymerschicht (400) nicht nachvernetzbar oder nachvernetzt ist.
